(19) **Europäisches Patentamt / European Patent Office / Office européen des brevets**

(11) **EP 4 679 761 A1**

(12) ## EUROPEAN PATENT APPLICATION

(43) Date of publication:
**14.01.2026 Bulletin 2026/03**

(21) Application number: **24306183.5**

(22) Date of filing: **12.07.2024**

(51) International Patent Classification (IPC):
**H04L 9/00** (2022.01)  **H04L 9/08** (2006.01)
**H04L 9/30** (2006.01)

(52) Cooperative Patent Classification (CPC):
**H04L 9/008; H04L 9/0825; H04L 9/302**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Orange**
**92130 Issy-les-Moulineaux (FR)**

(72) Inventors:
• **PLESA, Mihail**
**BUCHAREST (RO)**
• **IRIMIA, Sebastian**
**BUCHAREST (RO)**
• **DAVID, Simona**
**BUCHAREST (RO)**
• **STANESCU, Dan Mihai**
**BUCHAREST (RO)**

(74) Representative: **Plasseraud IP**
**104 Rue de Richelieu
CS92104
75080 Paris Cedex 02 (FR)**

(54) **PRIVACY PRESERVING NEURAL NETWORK COMPUTATION USING PARTIALLY HOMOMORPHIC ENCRYPTION**

(57)     A method for processing a digital content by a client device, comprising:
- obtaining a plaintext representative of the content, and information regarding a neural network comprising a plurality of layers;
- iterating over the layers, comprising:
• encrypting the plaintext by applying an encryption protocol being homomorphic with respect to addition to the plaintext;
• sending the resulting ciphertext to a processing device;
• receiving a processed ciphertext from the processing device, the processed ciphertext being determined by the processing device by applying weights of a current layer to the ciphertext;
• decrypting the processed ciphertext;
• processing the decrypted processed ciphertext to obtain a processed plaintext, by applying an activation function of the current layer to the decrypted processed ciphertext, wherein in a next iteration, the processed plaintext is used as the plaintext;

- obtaining an output plaintext equal to the processed plaintext of a last iteration.

FIG. 3

## Description

The present disclosure generally belongs to the technical field of encryption and decryption of digital content.

More precisely, the present disclosure relates to a method for processing a digital content in a neural network by applying a partially homomorphic encryption protocol being homomorphic with respect to addition.

## Background of the disclosure

When seeking to analyze digital content, entities such as companies and individuals (here referred to as "client device") often rely on third-parties (here referred to as "processing device"), mainly because a client device does not possess the required computational ressources and/or the know-how required for the respective analysis.

The analysis of digital content involves for example image classification, image feature classification or threat classification in Internet traffic, and may be carried out by the processing device by use of a machine learning data structure such as a neural network.

The properties of the used machine learning data structure may be public. However, a client device generally seeks to keep the digital content to be processed confidential.

Solutions exist for processing confidential digital content, wherein the processing device only has knowledge of a ciphertext before and after processing, but not of the respective plaintexts. The known solutions use homomorphic encryption protocols, secure multi-party computation, differential privacy or trust execution environments.

US 11,196,541 B2 describes the use of a fully homomorphic encryption (FHE) scheme to encrypt digital content. In this FHE scheme, a client device encrypts a plaintext representative of the digital content and sends the resulting ciphertext to a processing device. The processing device feeds the ciphertext into a machine learning data structure and sends the resulting processed ciphertext back to the client device, which may then decrypt the processed ciphertext.

However, the use of such a FHE scheme has several drawbacks.

In particular, ciphertexts generated by FHE are very large, which leads to an inflation of the data. In addition, FHE is rather slow in terms of effective runtime of the encryption scheme. Furthermore, FHE is limited to the number of successive multiplications, and thus cannot be used with neural networks having more than a certain number of layers (i.e. a certain depth). Indeed, the main problem with FHE (especially CKKS - the most used FHE scheme) is that after a number of consecutive multiplications, the ciphertext accumulates so much noise that it can no longer be decrypted.

Accordingly, a need exists for an efficient method for processing confidential digital content that is neither limited by the depth of a neural network nor by the size of the digital content.

## Summary

The present disclosure remedies the shortcomings of prior art.

It is disclosed a method for processing a digital content, comprising:

- obtaining, by a client device, a plaintext representative of a digital content to be processed, and information regarding a neural network comprising a plurality of layers;
- iterating over at least several consecutive layers among the plurality of layers in an intended order of application of said at least several consecutive layers to the digital content, comprising:

  • encrypting, by the client device, the plaintext to obtain a ciphertext, by applying a partially homomorphic encryption protocol being homomorphic with respect to addition to the plaintext;
  • sending, by the client device, the ciphertext to a processing device;
  • receiving, by the client device, a processed ciphertext from the processing device, the processed ciphertext being determined by the processing device by applying weights of a current layer among said at least several consecutive layers to the ciphertext;
  • decrypting, by the client device, the processed ciphertext;
  • processing, by the client device, the decrypted processed ciphertext to obtain a processed plaintext, by applying an activation function of the current layer to the decrypted processed ciphertext, wherein in a next iteration, the processed plaintext is used as the plaintext;

- obtaining, by the client device, an output plaintext equal to the processed plaintext of a last iteration.

The client device may be any kind of device, such as a computer, capable of exchanging data with a processing device and capable of processing data and of encrypting and decrypting data. The client device may have a specific arrangement and/or specific programming in order to implement the different portions of the method.

The processing device may be any kind of device, such as a computer, capable of exchanging data with a client device and capable of processing data. The processing device may have a specific arrangement and/or a specific programming in order to implement the different portions of the method.

The expression *"obtaining, by a client device, a plaintext"* may mean that the plaintext is determined by the client device, or that the plaintext is sent by another device to the client device and received by the client device.

The expression *"obtaining, by a client device, [...] information regarding a neural network comprising a plurality of layers"* may mean that the neural network is determined by the client device, or that the information regarding the neural network is sent by another device to the client device and received by the client device.

The digital content may be any kind of data to be processed. For example, the digital content may be data which represent an image and the method may then be applied to these data in order to identify a pattern in the image.

The plaintext may be a tensor of any dimensions.

A homomorphic encryption is a form of encryption that allows computations to be performed on a ciphertext, i.e. on encrypted data, without having to decrypt the ciphertext. The resulting computations are directly translated into the plaintext. This means that encrypting a plaintext, applying a given transformation to the resulting ciphertext and then decrypting the processed ciphertext will lead to the same result as if the transformation had been directly applied to the plaintext.

A partially homomorphic encryption protocol being homomorphic with respect to addition is an encryption protocol that ensures that multiplicative operations performed on the ciphertext are translated into the plaintext. Since the scheme is homomorphic with addition implies that the scheme is homomorphic with constant multiplication (multiplication by a factor which is not encrypted), this means that when multiplying the ciphertext by a factor (e.g. a matrix) and then decrypting the ciphertext, the resulting decrypted ciphertext will correspond to the initial plaintext multiplied by the factor.

*"partially homomorphic encryption protocol being homomorphic with respect to addition"* may mean that the encryption protocol is homomorphic with respect to addition (and multiplication) but not homomorphic with respect to other mathematical operations.

A general representation of a neural network with L layers may be described as:

$$F(x) = g_L \circ f_L \circ g_{L-1} \circ f_{L-1} \circ ... \circ g_1 \circ f_1(x)$$

where $f_i$ represents a linear function of the form $f_i(x) = W_i \times x + b_i$ and $g_i$ represents a non-linear function. $x$ may be the digital content to be processed.

In each iteration, the information of a given layer, referred to as current layer, among the layers of the neural network may be applied.

The multiplicative portion $W_i \times x$ of the linear function $f_i(x)$ may be applied by the processing device to the ciphertext. Since the ciphertext has been obtained by applying the above-mentioned partially homomorphic encryption protocol to the plaintext, the decrypted processed ciphertext will be modified by the same multiplicative factor $W_i$ when compared to the initial plaintext.

$W_i$ may be weight matrix comprising a plurality of weights of the respective layer.

The non-linear function $g_i$ may be applied by the client device to the decrypted processed ciphertext. The non-linear function may in particular correspond to an activation function of the i-the layer of a neural network.

Such an activation function may help the neural network to use important information while suppressing irrelevant data points. The activation function may decide which portions of the decrypted processed ciphertext should be activated and used further or not.

The portion $b_i$ of the linear function $f_i(x)$ may be applied by the client device.

Depending on the application, it is in principle possible that the information of only several consecutive layers of the neural network is applied to the digital content rather than the information of all layers.

The proposed method allows efficiently processing a confidential digital content, which is achieved by iteratively applying the information contained in a neural network to a given digital content without revealing the digital content to a third-party such as the processing device. The processing device receives from the client device the ciphertext and sends back the processed ciphertext to the client device. The processing device has no information about the plaintext, the decrypted processed ciphertext of the processed plaintext.

When compared to methods using a fully homomorphic encryption protocol, the present method which uses a partially homomorphic encryption protocol being homomorphic with respect to addition produces smaller ciphertexts, runs considerably faster and the respective ciphertexts accumulate less noise.

The proposed method is innovative in that a partially homomorphic encryption protocol being homomorphic with respect to addition is used iteratively by passing back and forth between the client device and the processing device, which allows efficiently processing confidential digital content without revealing the digital content and without being limited by the depth of the neural network or by the size of the digital content.

In an embodiment, the neural network may comprise an input layer, at least one hidden layer and an output layer, and said at least several consecutive layers may comprise the at least one hidden layer and the output layer.

The input layer may be configured to receive the input data, here the ciphertext, but without transforming the input data. The input data may be transformed by the hidden layers and the ouput layer.

Therefore, the number of iterations to be performed may be equal to the number of hidden layers and the output layer.

In an embodiment, the activation function of at least one hidden layer among the plurality of layers may comprise a rectified linear unit.

The rectified linear unit, also referred to as ReLU, may be defined as $g_i(P_i) = P_i$ if $P_i > 0$ and $g_i(P_i) = 0$ otherwise, where $P_i$ is the decrypted processed ciphertext.

In an embodiment, the activation function of the output layer may comprise a softmax activation function or a sigmoid activation function.

The softmax function may take as input a vector $z$ of $K$ real numbers, and normalize it into a probability distribution consisting of $K$ probabilities proportional to the exponentials of the input numbers. The softmax activation function may be

$$soft\,max(P_j) = \frac{e^{P_j}}{\sum_{j'} e^{P_{j'}}}$$

defined as:                    . Here, each single output of a current layer may be calculated separately.

The sigmoid activation function may be defined as: $\sigma(P_j) = \frac{1}{1+e^{-P_j}}$

In an embodiment, the weights of a current layer may form a weight matrix, wherein the ciphertext may be in the form of a ciphertext matrix, and wherein applying the weights of a current layer to the ciphertext may comprise multiplying the weight matrix and the ciphertext matrix.

In an embodiment, the ciphertext to be processed by the processing device may be in the form of a vector.

The plaintext may be a tensor of any dimension comprising n elements. In order to process the plaintext, the tensor may be deserialized into a vector of dimension (1xn) or (nx1) (depending on the specific implementation of the network).

The weight matrix may be in the form (nxm) or (mxn) (depending on the specific implementation) where m is the number of neurons of the current layer. The output will be vector having dimensions (1xm) or (mx1), where m is the number of output neurons.

In an embodiment, processing the decrypted processed ciphertext further may comprise adding a bias term to the the decrypted processed ciphertext.

The bias term may correspond to the portion $b_i$ of the linear function $f_i(x)$ mentioned above.

In an embodiment, the neural network may be a pre-trained neural network.

A pre-trained neural network may be a neural network that has been trained on a large dataset, and may already have learned to recognize a wide range of features and patterns in the input data.

All parameters of the pre-trained neural network, such as weight coefficients and activation functions may be set, i.e. these parameters do not change during application of the layers of the neural network to the digital content.

In an embodiment, the partially homomorphic encryption protocol may be a Paillier cryptosystem, a functional encryption scheme, or a secure multi-party protocol.

Any partially homomorphic encryption protocol being homomorphic with respect to addition may be used.

A specific advantage of the Paillier cryptosystem is that two ciphertexts can be multiplied, without having to decrypt the respective ciphertexts. When decrypting the two multiplied ciphertexts one obtains an addition of the respective plaintexts.

Another aspect of the present disclosure is related to a computer program product comprising instructions which, when the instructions are executed by a processing unit, cause the processing unit to implement a method as described above.

This program may use any programming language (for example, an object-oriented language or other), and be in the form of interpretable source code, partially compiled code, or fully compiled code.

Another aspect of the disclosure is related to a client device, comprising:

- a circuit configured to obtain a plaintext representative of a digital content to be processed, and information regarding a neural network comprising a plurality of layers;
- a circuit configured to iterate over at least several consecutive layers among the plurality of layers in an intended order of application of said at least several consecutive layers to the digital content;
- a circuit configured to encrypt the plaintext to obtain a ciphertext, by applying a partially homomorphic encryption protocol being homomorphic with respect to addition to the plaintext;
- an interface configured to send the ciphertext to a processing device;

- an interface configured to receive a processed ciphertext from the processing device, the processed ciphertext being determined by applying weights of a current layer among said at least several consecutive layers to the ciphertext;
- a circuit configured to decrypt the processed ciphertext;
- a cicuit configured to process the decrypted processed ciphertext to obtain a processed plaintext, by applying an activation function of the current layer to the decrypted processed ciphertext, wherein in a next iteration, the processed plaintext is used as the plaintext;
- a circuit configured to obtain an output plaintext equal to the processed plaintext of a last iteration.

Another aspect of the disclosure is related to a processing device, comprising:

- an interface configured to obtain information regarding a neural network comprising a plurality of layers;
- a circuit configured to iterate over at least several consecutive layers among the plurality of layers in an intended order of application of said at least several consecutive layers to a digital content;
- an interface configured to receive, from a client device, a ciphertext, the ciphertext being obtained by encrypting a plaintext representative of the digital content by applying a partially homomorphic encryption protocol being homomorphic with respect to addition to the plaintext;
- a circuit configured to determine a processed ciphertext, by applying weights of a current layer among said at least several consecutive layers to the ciphertext;
- an interface configured to send the processed ciphertext to the client device, wherein in a next iteration, a processed plaintext obtained by decrypting the processed ciphertext and by applying an activation function of the current layer to the decrypted processed ciphertext is used as the plaintext.

Another aspect of the disclosure is related to a system comprising a client device as described above and a processing device as described above.

The client device and the client device may be for example a computer.

The client device and the processing device may communicate over any communication channel (private or public), for example via Internet.

The system may be configured to implement the method described above.

The system allows efficiently processing a confidential digital content, which is done by iteratively applying the information contained in a neural network to a given digital content without revealing the digital content to a third-party such as the processing device. The processing device receives from the client device the ciphertext and sends back the processed ciphertext to the client device. The processing device has no information about the plaintext.

When compared to a fully homomorphic encryption protocols, the described partially homomorphic encryption protocol being homomorphic with respect to addition produces smaller ciphertexts, runs considerably faster and the respective ciphertexts accumulate less noise.

The proposed client device, processing device and system are innovative in that a partially homomorphic encryption protocol being homomorphic with respect to addition is used iteratively by passing back and forth between the client device and the processing device, which allows efficiently processing confidential digital content without revealing the digital content and without being limited by the depth of a neural network or by the size of the digital content.

**Brief Description of Drawings**

Other features, details and advantages will be shown in the following detailed description and on the figures, on which:

**Fig. 1**

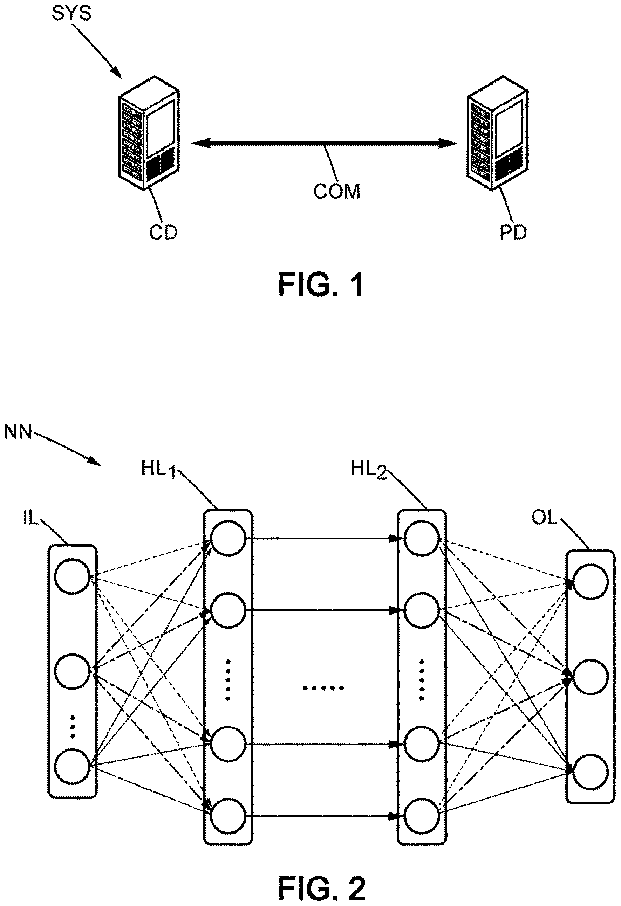

[Fig. 1] shows an arrangement of a system comprising a client device and a processing device according to the present disclosure.

**Fig. 2**
[Fig. 2] shows a schematic view of a neural network used in the method for processing a digital content according to the present disclosure.

**Fig. 3**

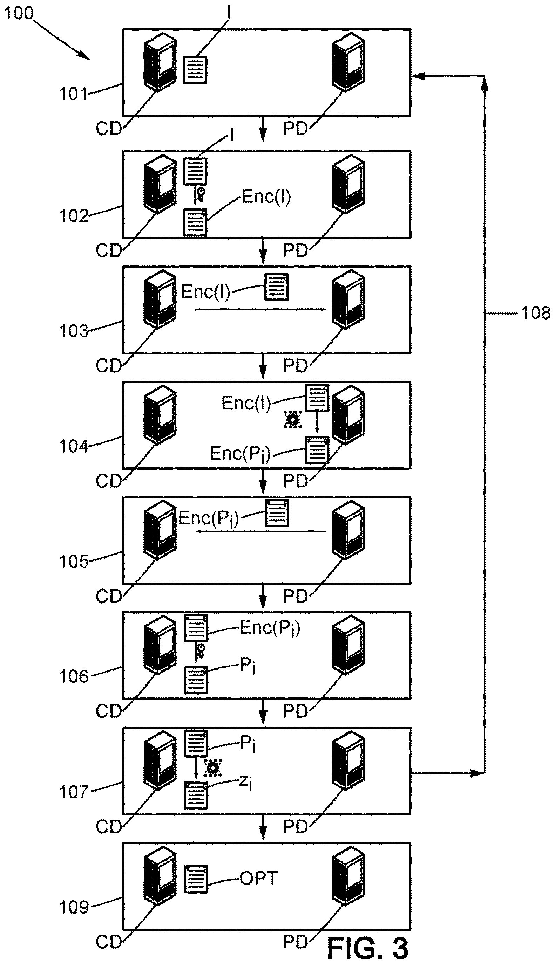

[Fig. 3] shows a flow chart of a method for processing a digital content according to the present disclosure.

**Fig. 4**

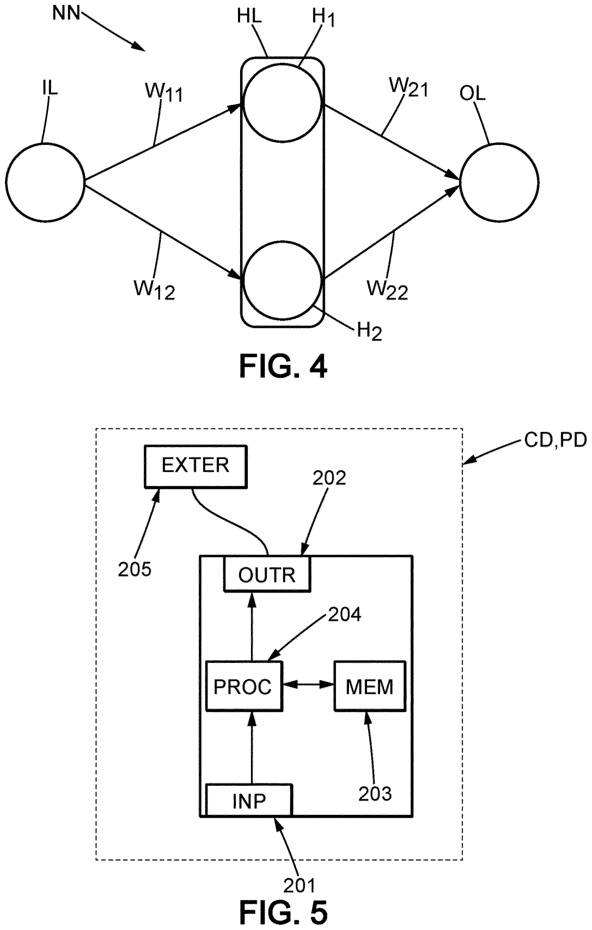

[Fig. 4] shows an example of a neural network that may be used in the method for processing a digital content according to the present disclosure.

**Fig. 5**

[Fig. 5] shows an embodiment of a client device/a processing device according to the present disclosure.

**Description of Embodiments**

In the following, a method for processing a digital content is presented. The method may be implemented according to several embodiments.

**Figure 1** shows a possible arrangement of a system SYS by which the method may be implemented.

The system comprises a client device CD and a processing device PD that may communicate with each other over a communication channel COM such as the Internet.

For example, the client device CD and the processing device PD may each be a server.

The client device CD may determine a digital content to be processed, for example an image to be analyzed, but not dispose of the required ressources for processing the digital content. Therefore, the client device CD may rely on a processing device PD to process at least partially this digital content.

The digital content may be confidential and the client device CD may not want to reveal the digital content to the processing device PD or any other third-party.

Therefore, the client device CD may encrypt a plaintext representative of the digital content, and send the resulting ciphertext to the processing device PD. The processing device PD may process the ciphertext and send the processed ciphertext back to the client device CD which may then decrypt it and obtain the decrypted processed ciphertext.

Like this, the client device CD may be able to delegate some of the processing of the digital content to the processing device PD without revealing the digital content to the processing device PD.

The digital content may be processed by applying information of a neural network to it. Such a neural network NN is shown in **figure 2**. The neural network NN may comprises a plurality of layers: an input layer IL, one or more hidden layers $HL_1$, $HL_2$ and an output layer OL.

The input layer IL may be configured to receive the ciphertext, and the hidden layers $HL_1$, $HL_2$ and the output layer OL may be configured to process the ciphertext.

A general representation of a neural network NN with L+1 layers may be:

$$F(x) = M_L \circ M_{L-1} \circ ... \circ M_1 = g_L \circ f_L \circ g_{L-1} \circ f_{L-1} \circ ... \circ g_1 \circ f_1(x)$$

The input layer IL is not represented in $F(x)$ because the input layer IL may have no other task than receiving the ciphertext, i.e. the input layer IL may not transform the ciphertext. Therefore, the layer denoted $M_1$ may be the first hidden layer $HL_1$. The layer denoted $M_L$ may be the output layer OL.

Depending on the application, it is in principle possible that the information of only several consecutive layers of the neural network NN is applied to the digital content rather than the information of all layers. The numbering i = 1, 2 ...L-1, L may then refer to these consecutive layers of the neural network that are effectively used.

In $F(x)$, the expression $M_i = g_i \circ f_i$ is the information of the i-th layer, with i = 1, 2 ...L-1, L. $f_i$ represents a linear function of the form $f_i(x) = W_i \times x + b_i$ and $g_i$ represents a non-linear function, also referred to as activation function. $x$ represents the digital content to be processed, and $W_i$ may be a weight matrix comprising one or more weights of the respective layer. $b_i$ may be an addition part, referred to as bias term.

The neural network NN may be a pre-trained neural network in which all weights are predetermined.

All properties of the neural network NN may be public.

For example, the nonlinear function of the hidden layers $HL_1$, $HL_2$ may be a rectified linear unit (also referred to as ReLU), and the nonlinear function of the output layer OL may be a softmax activation function or a sigmoid activation function.

Generally, when mutiplying a generic encryption function $Enc()$ to a ciphertext and then decrypting the processed ciphertext, the information of the function applied to the ciphertext is generally not directly translated into the plaintext, i.e. $b * Enc(a) \neq Enc(b * a)$.

When using an encryption scheme that is homomorphic with respect to addition, a multiplicative operation applied to a ciphertext will also be present in the plaintext after decryption. Indeed, the fact that the scheme is homomorphic with addition implies that the scheme is homomorphic with constant multiplication (multiplication by a factor which is not encrypted). For such an ecryption scheme the following relation holds: $b * Enc(a) = Enc(b * a)$

This means that the multiplicative portion $W_i \times x$ of the linear function $f_i(x) = W_i \times x + b_i$ may be carried out on the ciphertext by the processing device PD, and the decrypted processed ciphertext will be modified by the same factor $W_i$

when compared to the initial plaintext.

Thus, the multiplication portion $W_i \times x$, which is generally the most resource-demanding operation, may be delegated to the processing device PD.

Although it is possible to use a fully homomorphic encryption protocol (i.e. a protocol that is homomorphic not only with respect to multiplication and addition, but also with respect to other mathematical operations) in the frame of the present disclosure, it is sufficient and even advantageous to use a partially homomorphic encryption protocol being homomorphic with respect to addition only.

When compared to a fully homomorphic encryption protocol, a partially homomorphic encryption protocol being homomorphic with respect to addition produces smaller ciphertexts, it runs considerably faster and the ciphertext accumulated less noise.

The addition part (bias term $b_i$) and the non-linear function $g_i$ comprise operations other than addition and are therefore not carried out on the ciphertext, but on the plaintext by the client device CD.

A flowchart of the method 100 for processing the digital content is shown in **figure 3.**

At the beginning of the method 100, the client device CD may obtain (step 101) a plaintext $I$ representative of a digital content $x$ to be processed. The plaintext $I$ may be a tensor of any dimension. The client device CD may either determine the plaintext $I$ itself or receive instructions regarding the plaintext $I$ to be processed.

The client device CD may further obtain (also in step 101) information regarding a neural network NN comprising instructions for processing the digital content.

For example, for the case in which the digital content comprises data which represent an image, the neural network NN may store instructions of an algorithm for processing these data which represent the image, in order to detect a pattern in the image.

The client device CD may either determine the neural network NN itself or receive instructions regarding the neural network NN to use for processing the digital content.

The method consists of iterating (step 108) over the layers IL, $HL_1$, $HL_2$, OL of the neural network NN in an intended order of application of the layers to the digital content. In each iteration, another layer of the neural network NN among the hidden layers $HL_1$, $HL_2$ and the output layer OL is applied.

As mentioned, the input layer IL may have no other task than receiving the ciphertext, and only the hidden layers $HL_1$, $HL_2$ and the output layer OL may comprise information to be applied to the ciphertext. Therefore, the number of iterations may correspond to the number of hidden layers $HL_1$, $HL_2$ and the output layer OL.

In the first iteration, the information of the first hidden layer $HL_1$ may be applied to the ciphertext. A current layer index may, in the first iteration, be defined as $i \gets 1$.

The client device CD may then encrypt (step 102) the plaintext $I$ and send (step 103) the resulting ciphertext $Enc(I)$ to the processing device PD.

The processing PD device may then apply the weight matrix $W_i$ of the current layer, i.e. the first layer $HL_1$, to the ciphertext $Enc(I)$: $Enc(P_i) \gets W_i \times Enc(I)$ to determine (step 104) a processed ciphertext $Enc(P_i)$.

The ciphertext $Enc(I)$ may be a tensor of any dimension.

In order to carry out the calculation $Enc(P_i) \gets W_i \times Enc(I)$, the ciphertext $Enc(I)$ may first be deserialized into a vector of dimension (1xn) or (nx1) (depending on the specific implementation). The weight matrix may be of the form (nxm) for a vector of dimension (1xn) or of the form (mxn) for a vector of dimension (nx1), where m corresponds to the number of nodes in the respective layer of the neural network NN. The processed ciphertext $Enc(P_i) \gets W_i \times Enc(I)$ may then have the form (1xm) or (mx1), depending on the specific implementation of the neural network NN.

The processed ciphertext $Enc(P_i)$ may then be sent back and received (step 105) by the client device CD, be decrypted (step 106) by the client device CD and then be further processed (step 107) by the client device CD.

The processing (step 107) by the client device CD may comprise adding the bias term $b_i$ to the decrypted processed ciphertext $P_i$ in order to obtain a processed plaintext $z_i$: $z_i \gets P_i + b_i$

Having performed the operation $W_i \times I$ on the processing device PD side and the addition operation regarding the bias term $b_i$ on the client device CD side, the full information of the linear function $f_1(x) = W_1 \times x + b_1$ of the first layer has been applied to the digital content.

The processing (step 107) by the client device CD may further comprise applying the non-linear function $g_1$ of the first hidden layer $M_1$ to the processed plaintext $z_i$: $z_i \gets g_i(z_i)$.

After the processing (step 107) by the client device CD, the entire information of the first hidden layer HL1 has now been applied to the digital content, wherein the most resource-intensive calculation ($W_i \times I$) has been delegated to a processing device.

The processed plaintext $z_i$ of the first iteration may then be used as a plaintext $I$ in the second iteration. Thus, in the second iteration, the current layer index is updated $i \gets 2$ and the plaintext $I$ as well $I \gets z_i$.

This process can be iterated (step 108) until all hidden layers $HL_1$, $HL_2$ and the output layer are applied to the digital content. The iteration 108 stops when the current layer index is equal to L+1.

The processed plaintext $z_i$ of the last iteration, referred to as output plaintext OPT, may then be obtained (step 109). The output plaintext OPT may be output, for example on a computer screen.

For the case in which the digital content is an image and in which the neural network NN processes the image in order to detect a pattern in the image, the output plaintext OPT may correspond to the pattern detected in the image.

The processing device PD only has knowledge of the ciphertext $Enc(I)$ and the processed ciphertext $Enc(P_i)$, but not of the underlying plaintext $I$, the decrypted processed ciphertext $P_i$ or the processed plaintext $z_i$. Therefore, no information regarding the digital content is revealed to the processing device PD.

A detailed example of the method 100 using the Paillier cryptosystem and a small neural network NN comprising an input layer IL, one hidden layer HL and an output layer OL is presented in **figure 4.**

However, it should be noted that cryptosystems other than the Paillier cryptosystem may be applied, such as a functional encryption scheme or a secure multi-party protocol.

The input layer IL comprises one node, the hidden layer HL two nodes $H_1$, $H_2$ and the output layer OL one node. When applying the hidden layer HL to the respective ciphertext, weights $w_{11}$ and $w_{12}$ will be applied to the respective ciphertext. When applying the output layer OL to the respective ciphertext, weights $w_{21}$ and $w_{22}$ will be applied.

In the Paillier cryptosystem, a public key $n$, which is a product of two (generally randomly chosen) large prime numbers $p$ and $q$ may be determined: $n = p \times q$.

A private key $\phi(n) = (p - 1) \times (q - 1)$ may be determined as a function of these prime numbers.

In addition, a random integer r may be chosen in the range $0 < r < n$, wherein $gcd\ (r, n) = 1$. Here, $gcd$ stands for *"greatest common divisor"*.

It is assumed that the plaintext $I$ is in an appropriate formate for encryption, for example in the form of a series of integers. If necessary, a preliminary operation for bringing the plaintext $I$ in the desired format may be carried out. The plaintext $I$ to be encrypted may be in the range $0 \leq I < n$.

For a given plaintext $I$, the ciphertext $Enc(I)$ may then be calculated as $Enc(I) = (n + 1)^I \times r^n \bmod n^2$. $Enc()$ is referred to as encryption function.

For a given processed ciphertext $Enc(P_i)$, a decrypted processed ciphertext $P_i$ may be determined according to

$$P_i = Dec(Enc(P_i)) = \left( \frac{(Enc(P_i)^{\phi(n)} \bmod n^2) - 1}{n} \times \phi(n)^{-1} \bmod n \right)$$

. $Dec()$ is referred to as decryption function and may be the inverse function of the encryption function $Enc()$.

The following relation holds for two plaintexts $I_1$ and $I_2$ when encryption and decryption according to the Paillier cryptosystem is used:

$$Dec(Enc(I_1, r_1) \times Enc(I_2, r_2) \bmod n^2) = I_1 + I_2 \bmod n$$

Here, $r_1$ and $r_2$ are the respective random integers r mentioned above for each of the two plaintexts $I_1$ and $I_2$.

Thus, multiplying two ciphertexts $E(I_1, r_1)$ and $E(I_2, r_2)$ results in a ciphertext which corresponds to the encryption of the sum of the initial plaintexts.

In addition, the following relation holds:

$$Dec(Enc(I, r)^k \bmod n^2) = kI \bmod n$$

Thus, raising a ciphertext $Enc(I, r)$ to the power $k$ (a public constant), results in another ciphertext that corresponds to the encryption of the product between the initial plaintext and the constant $k$.

Further back to the example of **figure 4,** the iteration over the layers of the neural network NN starts by setting an index of a current layer index to i <- 1 .

The plaintext $I$ may then be encrypted using the Paillier encryption:

$$Enc(I) = (n + 1)^I \times r^n \ mod\ n^2$$

The resulting ciphertext $Enc(I)$ may then be sent to the processing device PD.

The processing device PD may then compute $Enc(h_1)$ and $Enc(h_2)$:

$$Enc(h_1) = Enc(I)^{w_{11}} \ mod\ n^2$$

$$Enc(h_2) = Enc(I)^{w_{12}} \ mod\ n^2$$

Here, $Enc(h_1)$ corresponds to the result obtained after applying the weight $w_{11}$ of the first node $H_1$ to the ciphertext

*Enc(I),* and *Enc(h₂)* corresponds to the result obtained after applying the weight $w_{12}$ of the second node $H_2$ to the ciphertext *Enc(I).*

The processing device PD may then send the processed ciphertexts *Enc(h₁)* and *Enc(h₂)* back to the client device CD.

The processed ciphertexts *Enc(h₁)* and *Enc(h₂)* may then be decrypted by applying the relation mentioned in par. [0127], which leads to $h_1 = w_{11} \times I$ and $h_2 = w_{12} \times I$.

In this case, the bias term is assumed to be zero.

The non-linear function $g_1$ of the first hidden layer $HL_1$ may then be applied: $z_i = \begin{pmatrix} ReLU(h_1) \\ ReLU(h_2) \end{pmatrix}$.

The client device CD may then start the second iteration by updating the layer index i <- 2 and setting the plaintext *I* as $I \leftarrow z_i = \begin{pmatrix} ReLU(h_1) \\ ReLU(h_2) \end{pmatrix}$.

The client CD may encrypt the plaintext *I* using the Paillier encryption and send the result to the processing device PD:

$$Enc(I) = \begin{pmatrix} (n+1)^{ReLU(h_1)} \times r^n \ mod \ n^2 \\ (n+1)^{ReLU(h_2)} \times r^n \ mod \ n^2 \end{pmatrix} = \begin{pmatrix} Enc(ReLU(h_1)) \\ Enc(ReLU(h_2)) \end{pmatrix}$$

The processing device PD may compute the processed ciphertext *Enc(Pᵢ)* by applying the respective weights $w_{21}$ and $w_{22}$ of the output layer OL and send it to the client device CD:

$$Enc(P_i) = \left( Enc\left(ReLU(h_1)\right)^{w21} \times Enc\left(ReLU(h_2)\right)^{w22} \ mod \ n^2 \right)$$

The client device CD may decrypt the processed ciphertext *Enc(Pᵢ)* to obtain the decrypted processed ciphertext $P_i$ and recover the result (by appling the relations mentioned in par. [0124] and [0127]):

$$P_i = w_{21} \times ReLU(h_1) + w_{22} \times ReLU(h_2)$$

The output plaintext OPT may then be: $P_i = w_{21} \times ReLU(h_1) + w_{22} \times ReLU(h_2)$.

Regarding the potential applications, the method 100 may be used for example for image classification and image feature classification. The images may represent information that the client device does not want to be known to the processing device.

Some examples include image-based insider threat classification, image-based encrypted internet traffic classification, image-based malware classification, or object detection.

Regarding the example of image-based insider threat classification, resource access patterns of employees in an organization may be considered. These patterns may be transposed in images and then used to perform anomaly detection. For example, usage patterns of employees may be used to create grayscale images which represent the digital content to be processed by the neural network NN. The output plaintext OPT may then represent two options: "the traffic is malicious" and "the traffic is not malicious".

Regarding the example of image-based encrypted internet traffic classification, a data flow may be transferred into an image that can be used to identify a flow category (browsing, chat, video, etc.) and the application in use.

**Figure 5** shows a possible embodiment of a client device CD and a processing device PD configured to implement at least part of the method 100 described in relation to **figure 3.**

Each of the client device CD and the processing device PD comprises at least one input interface 201 for receiving messages or instructions, and at least one output interface 202 for communicating with external devices 205.

In particular, the client devices CD may be configured to send a ciphertext *Enc(I)* to the processing device PD via its output interface 202, and to receive the processed ciphertext *Enc(Pᵢ)* from the processing device PD via its input interface 201.

The processing device PD may receive the ciphertext *Enc(I)* from the client device CD via its input interface 201 and send the processed ciphertext *Enc(Pᵢ)* to the client device CD via its output interface 202.

Each of the client device CD and the processing device PD further comprises a memory 203 for storing instructions enabling the implementation of at least part of the methods 100, the data received, and temporary data for carrying out the various operations of the method 100 as described above.

Each client device CD and processing device PD may further comprise one or more circuits 204, for example:

- a processor able to interpret instructions in the form of a computer program, or
- a circuit board in which the operations of the disclosed method 100 are described in the silicon, or
- a programmable electronic chip such an FPGA chip ("Field-Programmable Gate Array"), an SOC ("System On Chip"), or an ASIC ("Application Specific Integrated Circuit").

SOCs or systems on a chip are embedded systems that integrate all the components of an electronic system into a single chip. An ASIC is a specialized electronic circuit that groups customized functionalities for a given application. ASICs are generally configured during their manufacture and can be simulated by an operator of the client device CD and/or processing device PD. FPGA-type programmable logic circuits are electronic circuits that are reconfigurable by the operator of the client device CD and/or processing device PD.

Each portion of the method 100 illustrated in **figure 3** may be carried out by the same circuit or by an individual circuit.

The client device CD/ processing device PD may be a computer, an electronic component, or another device comprising a processor operably coupled to a memory, as well as, depending on the chosen embodiment, a data storage unit, and other associated hardware elements such as a network interface and a media reader for reading removable storage media and for writing to such media, which are not shown in **figure 5.**

Depending on the embodiment, the memory 203, the data storage unit, or the removable storage medium contain instructions which, when executed by circuit 204, cause this circuit to carry out or control the at least one input interface 201, the at least one output interface 202, the storage of data in memory 203, and/or the processing of data and/ or the implementation of at least part of the method 100 according to **figure 3.** The circuit 204 may be a component which implements the control of the client device CD and/or processing device PD.

In addition, the client device CD and/or processing device PD may be implemented in software form, in which case it takes the form of a program executable by a processor, or in hardware form, such as an application specific integrated circuit ASIC, a system on chip SOC, or in the form of a combination of hardware and software elements, for example a software program intended to be loaded and executed on an electronic component described above such as an FPGA, processor.

The client device CD and/or processing device PD may also use hybrid architectures, for example architectures based on a CPU+FPGA, a GPU ("Graphics Processing Unit"), or an MPPA ("Multi-Purpose Processor Array").

This disclosure is not limited to the example devices, systems, methods, and computer program products described above solely by way of example, but encompasses all variants conceivable to the person skilled in the art within the framework of the protection sought.

## Claims

1. A method (100) for processing a digital content, comprising:

    - obtaining (101), by a client device (CD), a plaintext ($I$) representative of a digital content to be processed, and information regarding a neural network (NN) comprising a plurality of layers (IL, HL, $HL_1$, $HL_2$, OL);
    - iterating (108) over at least several consecutive layers among the plurality of layers (IL, HL, $HL_1$, $HL_2$, OL) in an intended order of application of said at least several consecutive layers to the digital content, comprising:

        • encrypting (102), by the client device (CD), the plaintext ($I$) to obtain a ciphertext ($Enc(I)$), by applying a partially homomorphic encryption protocol being homomorphic with respect to addition to the plaintext ($I$);
        • sending (103), by the client device (CD), the ciphertext ($Enc(I)$) to a processing device (PD);
        • receiving (105), by the client device (CD), a processed ciphertext ($Enc(P_i)$) from the processing device (PD), the processed ciphertext ($Enc(P_i)$) being determined (104) by the processing device (PD) by applying weights of a current layer among said at least several consecutive layers to the ciphertext ($Enc(I)$);
        • decrypting (106), by the client device (CD), the processed ciphertext ($Enc(P_i)$);
        • processing (107), by the client device (CD), the decrypted processed ciphertext ($P_i$) to obtain a processed plaintext ($z_i$), by applying an activation function of the current layer to the decrypted processed ciphertext ($P_i$), wherein in a next iteration, the processed plaintext ($z_i$) is used as the plaintext ($I$);

        - obtaining (109), by the client device (CD), an output plaintext (OPT) equal to the processed plaintext ($z_i$) of a last iteration.

2. The method of claim 1, wherein the neural network (NN) comprises an input layer (IL), at least one hidden layer (HL, $HL_1$, $HL_2$) and an output layer (OL), and wherein said at least several consecutive layers comprise the at least one

hidden layer (HL, HL$_1$, HL$_2$) and the output layer (OL).

3. The method of claim 2, wherein the activation function of at least one hidden layer (HL, HL$_1$, HL$_2$) among the plurality of layers (IL, HL, HL$_1$, HL$_2$, OL) comprises a rectified linear unit.

4. The method of any one of claims 2 and 3, wherein the activation function of the output layer (OL) comprises a softmax activation function or a sigmoid activation function.

5. The method of any one of the previous claims, wherein the weights of a current layer form a weight matrix, and wherein the ciphertext *(Enc(I))* is in the form of a ciphertext matrix, and wherein applying the weights of a current layer to the ciphertext *(Enc(I))* comprises multiplying the weight matrix and the ciphertext matrix.

6. The method of any one of the previous claims, wherein the ciphertext *(Enc(I))* to be processed by the processing device (PD) is in the form of a vector.

7. The method of any one of the previous claims, wherein processing the decrypted processed ciphertext ($P_i$) further comprises adding a bias term to the the decrypted processed ciphertext ($P_i$).

8. The method of any one of the previous claims, wherein the neural network (NN) is a pre-trained neural network.

9. The method of any one of the previous claims, wherein the partially homomorphic encryption protocol is a Paillier cryptosystem, a functional encryption scheme, or a secure multi-party protocol.

10. A computer program product comprising instructions which, when the instructions are executed by a processing unit, cause the processing unit to implement a method (100) of any one of the previous claims.

11. A client device (CD), comprising:

   - a circuit configured to obtain a plaintext (*I*) representative of a digital content to be processed, and information regarding a neural network (NN) comprising a plurality of layers (IL, HL, HL$_1$, HL$_2$, OL);
   - a circuit configured to iterate over at least several consecutive layers among the plurality of layers (IL, HL, HL$_1$, HL$_2$, OL) in an intended order of application of said at least several consecutive layers to the digital content;
   - a circuit configured to encrypt the plaintext (*I*) to obtain a ciphertext (*Enc(I)*), by applying a partially homomorphic encryption protocol being homomorphic with respect to addition to the plaintext (*I*);
   - an interface configured to send the ciphertext (*Enc(I)*) to a processing device (PD);
   - an interface configured to receive a processed ciphertext (*Enc($P_i$)*) from the processing device (PD), the processed ciphertext (*Enc($P_i$)*) being determined by applying weights of a current layer among said at least several consecutive layers to the ciphertext (*Enc(I)*);
   - a circuit configured to decrypt the processed ciphertext (*Enc($P_i$)*);
   - a cicuit configured to process the decrypted processed ciphertext ($P_i$) to obtain a processed plaintext ($z_i$), by applying an activation function of the current layer to the decrypted processed ciphertext ($P_i$), wherein in a next iteration, the processed plaintext ($z_i$) is used as the plaintext (*I*);
   - a circuit configured to obtain (109) an output plaintext (OPT) equal to the processed plaintext ($z_i$) of a last iteration.

12. A processing device (PD), comprising:

   - an interface configured to obtain information regarding a neural network (NN) comprising a plurality of layers (IL, HL, HL$_1$, HL$_2$, OL);
   - a circuit configured to iterate over at least several consecutive layers among the plurality of layers (IL, HL, HL$_1$, HL$_2$, OL) in an intended order of application of said at least several consecutive layers to a digital content;
   - an interface configured to receive, from a client device (CD), a ciphertext (*Enc(I)*), the ciphertext (*Enc(I)*) being obtained by encrypting a plaintext (*I*) representative of the digital content by applying a partially homomorphic encryption protocol being homomorphic with respect to addition to the plaintext (*I*);
   - a circuit configured to determine a processed ciphertext (*Enc($P_i$)*), by applying weights of a current layer among said at least several consecutive layers to the ciphertext (*Enc(I)*);
   - an interface configured to send the processed ciphertext (*Enc($P_i$)*) to the client device (CD), wherein in a next iteration, a processed plaintext ($z_i$) obtained by decrypting the processed ciphertext (*Enc($P_i$)*) and by applying an activation function of the current layer to the decrypted processed ciphertext ($P_i$) is used as the plaintext ($I$).

13. A system (SYS) comprising a client device (CD) of claim 11 and a processing device (PD) of claim 12.

FIG. 1

FIG. 2

FIG. 3

**FIG. 4**

**FIG. 5**

Europäisches
Patentamt
European
Patent Office
Office européen
des brevets

# EUROPEAN SEARCH REPORT

**Application Number**

EP 24 30 6183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG QIAO ET AL: "GELU-Net: A Globally Encrypted, Locally Unencrypted Deep Neural Network for Privacy-Preserved Learning", PROCEEDINGS OF THE TWENTY-SEVENTH INTERNATIONAL JOINT CONFERENCE ON ARTIFICIAL INTELLIGENCE, 1 July 2018 (2018-07-01), pages 3933-3939, XP093229142, California DOI: 10.24963/ijcai.2018/547 ISBN: 978-0-9992411-2-7 * sections 2.1, 2.2 , 3, 4.1, 5.1, Algorithm 4.1 * | 1-13 | INV. H04L9/00 H04L9/08 H04L9/30 |
| X | QIANG ZHU ET AL: "2P-DNN : Privacy-Preserving Deep Neural Networks Based on Homomorphic Cryptosystem", ARXIV.ORG, CORNELL UNIVERSITY LIBRARY, 201 OLIN LIBRARY CORNELL UNIVERSITY ITHACA, NY 14853, 23 July 2018 (2018-07-23), XP081250727, * Abstract; sections 3.2, 4, 4.2, 5.1, 5.3 ;Figure 7 * | 1-13 | |
| X | BARYALAI MEHMOOD ET AL: "Towards privacy-preserving classification in neural networks", 2016 14TH ANNUAL CONFERENCE ON PRIVACY, SECURITY AND TRUST (PST), IEEE, 12 December 2016 (2016-12-12), pages 392-399, XP033087724, DOI: 10.1109/PST.2016.7906962 [retrieved on 2017-04-20] * Abstract, sections III-A, V.B, V.C, Figure 3 * | 1-13 | **TECHNICAL FIELDS SEARCHED (IPC)** H04L |

The present search report has been drawn up for all claims

| Place of search | Date of completion of the search | Examiner |
|---|---|---|
| Munich | 28 November 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 679 761 A1**

REFERENCES CITED IN THE DESCRIPTION

**Patent documents cited in the description**

- US 11196541 B2